(19) Europäisches Patentamt
European Patent Office
Office européen des brevets

(11) EP 2 835 381 A1

(12) # EUROPEAN PATENT APPLICATION

(43) Date of publication:
**11.02.2015 Bulletin 2015/07**

(21) Application number: **13179823.3**

(22) Date of filing: **09.08.2013**

(51) Int Cl.:
***C08C 19/28*** *(2006.01)* ***C08F 210/18*** *(2006.01)*
***C08F 255/06*** *(2006.01)* ***C08F 8/00*** *(2006.01)*
*B01J 23/46* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lanxess Elastomers B.V.**
**6167 RD Geleen (NL)**

(72) Inventor: **The designation of the inventor has not yet been filed**

(74) Representative: **Herbold, Matthias**
**LANXESS Deutschland GmbH**
**LIP-IPR**
**LANXESS Tower**
**Kennedyplatz 1**
**50569 Köln (DE)**

(54) **Functionalized olefinic copolymers**

(57) Functionalized copolymer

A functionalized copolymer having an average molecular weight Mn of at least 50.000 g/mol containing
a) structural units derived from ethylene
b) structural units derived from at least one $\alpha$-olefin and
c) 0.01 to 6.25 mol-% of structural units of the formula (1)

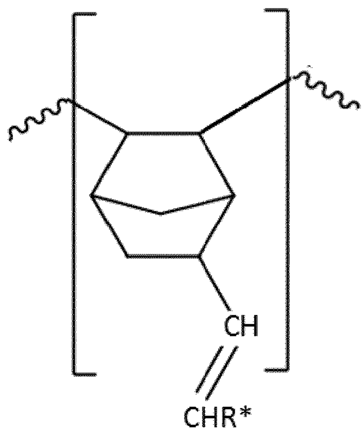

(1)

wherein R* means a heteroatom containing group, wherein the sum of the structural units contained in the copolymer is 100 mol%.



Printed by Jouve, 75001 PARIS (FR)

## Description

The present invention relates to a functionalized ethylene-α-olefin-diene rubber a method for their production by metathesis, a composition containing the same as well as articles made by out of them.

EPDM as the preferred ethylene-α-olefin-diene rubber is a technical rubber with outstanding properties and is broadly applied in industry e.g. for automotive, construction, consumer goods and material modification applications. However, certain properties like compatibility with polar substances or oil resistance are no inherent EPDM characteristics. Furthermore, filler polymer interaction is an important objective of research since physical properties strongly depend on these interactions and polarities need to be compatible between filler and polymer to obtain a molecular reinforcement.

In general, olefin metathesis involves catalytic cleavage of one or more double bonds and recombination of the resulting cleavage products to form different olefin containing reaction products. Numerous olefin metathesis processes are known such as ring closure metathesis (RCM), cross metathesis (CM), ring opening metathesis (ROM), ring opening metathesis polymerization (ROMP), acycylic diene metathesis polymerization (ADMET), self metathesis, metathesis of alkines with alkenes, polymerization of alkines and olefination of ketones. In cross metathesis olefines with low molar masses such as ethylene, propylene, and other 1-alkenes are employed in the molar mass reduction of unsaturated polymers. Metathesis of two or more different olefins is referred to as a "cross-metathesis".

Also functionalization of polyolefins using cross metathesis reaction is known in the art. In Chem. Commun., 2004, 422-423 the functionalization of polymers based on ethylene, propylene, 1,5-hexadiene copolymers containing 3-vinyl tetramethylene units via cross metathesis in the presence of different olefins, such as acrylates and fluorinated acrylates was disclosed.

In US 2009/0318647 a process is described to functionalize propylene co-oligomer comprising contacting an alkene metathesis catalyst with a heteroatom containing alkene and a propylene co-oligomer. In this patent only low molecular weight oligomers between Mn 300 to 30000 were described. Furthermore the functionalization takes place at the end of polymer main chain and not and the side chain.

In WO 2009009158 a process for preparing functionalized derivatives of polymers by metathesis of high molecular weight olefin copolymers containing pendant or non-backbone ethylenic unsaturation with a low molecular weight functionalized olefin was disclosed. In this patent also an example of the functionalization of a terpolymer based on ethylene, propylene, and ethylidene norbornene terpolymer (EPDM) via cross metathesis was published. In a patent example (example no.1, page 56) it was mentioned that gelling of the polymer occurred during the functionalization reaction. This observation indicates that gel formation occurred as a side product of the metathesis reaction. The resulting crosslinked products are no longer processable and therefore cannot be used for typical EPDM applications. In this patent the resulting polymers were not characterized in detail and the conversion rate was not determined.

It was an object of the present invention to provide a rubber with higher polarity in order to achieve a good oil resistance, a stronger adhesion to polar components (e.g. other polymers, metals), a better compatibility with polar polymers so that they are ideally suited for the use as a compatibilizer or for blends with other functionalized polymers.

It has now been surprisingly found that a functionalized copolymer as defined hereunder can achieve this goal.

The invention relates to a functionalized copolymer having an average molecular weight Mn of at least 50.000 g/mol containing

a) structural units derived from ethylene

b) structural units derived from at least one α-olefin and

c) 0.01 to 6.25 mol-% of structural units of the formula (1)

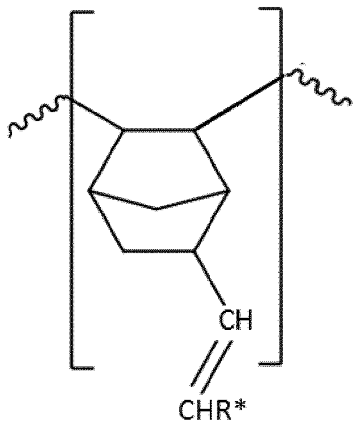

(1)

wherein R* means a heteroatom containing group, wherein the sum of the structural units contained in the copolymer rubber is 100 mol%.

**Component b)**

The preferred α-olefin from that the structural unit b) is derived having from 3 to 23 carbon atoms. Preferred examples of such α-olefins are propylene, 1-butene, 1-pentene, 1-hexene and 1-octene. Preferably the functionalized copolymer of the present invention contains structural units derived from propylene.

**Component c)**

For purposes of this invention and the claims thereto, a heteroatom is defined to be preferably any non-carbon, non-hydrogen atom, preferably any group 13 to 17 element, excluding carbon. Preferably R** is at least one heteroatom containing group containing from 1 to 50, preferably from 1 to 30 carbon atoms whereby the heteroatom is selected from the group consisting of Si, P, O, S, N, Cl, F, I and Br, preferably is selected from the group consisting of N, O, Cl, F and Br, most preferably is selected from the group consisting of N and O.

Preferably R* is selected from the group consisting of $C_{1-20}$-hydrocarbyl which does contain heteroatoms from the list consisting of N, O, S and halogen, halogen, $-OR^Y$, $-C(O)OR^Y$,$-OC(O)R^Y$, $-C(O)N(R^Y)_2$, $-C(O)R^Y$, -C(O)OM, $-OSO_3R^Y$, $-NO_3$, $-OP(O)(OR^Y)_2$, $OP(OR^Y)_2$, -CN, and $-OSiR^Y{}_3$, where $R^Y$ is hydrogen or $C_{1-20}$-hydrocarbyl which may not contain any heteroatoms or may contain heteroatoms from the list consisting of N, O, S and halogen, and wherein M is a monovalent cation, in particular alkali metal ion, such as $Na^+$.

Preferred $C_{1-20}$-hydrocarbyl that contain heteroatoms from the list consisting of N, O, S and halogen is F, Cl, Br and I.

Preferred halogen is Cl, Br or F.

The preferred radicals $-C(O)OR^Y$, $-OR^Y$, $-OC(O)R^Y$, $-C(O)N(R^Y)_2$, $-OSO_3R^Y$, $-OP(O)(OR^Y)_2$, $OP(OR^Y)_2$, and $-OSiR^Y{}_3$ respectively mean a radicals wherein $R^Y$ means hydrogen or hydrocarbyl having 1 to 12 carbon atoms that may not contain any heteroatoms or may contain heteroatoms from the list consisting of N, O, S and halogen, preferably ,methyl, ethyl, propyl, n-butyl, iso-butyl, t-butyl, pentyl, hexyl, octyl, decyl, dodeccyl, aminomethylen, 2,3-epoxypropyl, 1H,1H,2H,2H-perfluorodecyl, polyethylenglykol methylether and 2-ethylhexyl, ethylene glycol methyl ether.

Particularly preferred is R* which is the rest of the following olefins of the formula $H_2C=CH-R^*$ selected from the group consisting of acrylonitrile, acrylamide, allyl amine, acrylic acid, methyl acrylate, ethyl acrylate, glycidyl acrylate, tert-butyl acrylate, 1H,1H,2H,2H-perfluorodecyl acrylate, polyethylenglykol methyletheracrylate, 2-ethylhexyl acrylate and ethylene glycol methyl ether acrylate.

The functionalized copolymer according to the present invention preferably having an average molecular weight Mn in the range of 50.000 to 1.500.000, in particular in the range of 50.000 to 1.000.000 g/mol.

The polydispersity index (Mw/Mn or PDI) of the functionalized copolymer according to the present invention is preferably in the range from 1.5 to 100, and preferably from 1.8 to 10.

The functionalized copolymer preferably contains 0.03 to 2.95 mol-%, more preferably 0.06 to 1.73 mol-%, most preferably 0.28 - 1.44 mol-% of the structural unit (1).

Preferably the functionalized copolymer comprises from 51 to 96 mol-% structural units derived from ethylene, 0.01 to 6.25 mol-% of the structural units of the formula (1), 0 to 5.0 mol-%, in particular of 0 to 2 mol-%, most preferably

0 to 0.2 mol-% of structural units derived from other olefins than ethylene, α-olefin and formula (1), the balance being the α-olefin.

### Further structural units

In particular such other structural units are derived from non-conjugated dienes selected from the group consisting of dicyclopentadiene, 1,4-hexadiene, 5-methylene-2-norbornene, 5-vinyl-2-norbornene (VNB) and 5-ethylidene-2-norbornene (ENB), preferably selected from the list consisting of 5-ethylidene-2-norbornene and 5-vinyl-2-norbornene (VNB), in particular 5-vinyl-2-norbornene.
Preferably the functionalized copolymer comprises from structural units derived from propylene from 6.9 - 50 mol-%, preferably from 10.5 - 45 mol-%, most preferably from 14 - 40 mol-%.
The glass transition temperature (Tg) of the functionalized copolymer preferably as measured by DSC (differential scanning calorimeter), is preferably less than 0 °C, preferably less than -25 °C, preferably less than -35 °C.
Preferably the functionalized copolymer of the present invention has a gel content of smaller than 5 wt%, preferably smaller than 2.5 wt%, measured by gravimetric methods.
Preferably the functionalized copolymer of the present invention has a Mooney viscosity ML (1 +4) at 125 °C in the range fo 10 to 90, preferably from 20 to 85, in particular from 25 to 80.

### Process

The present invention also relates to a process for the manufacturing of a functionalized copolymer according to the present invention, the steps of the process comprising contacting a metathesic catalyst with a composition comprising:

i) at least one copolymer comprising

a) structural units derived from ethylene

b) structural units derived from at least one α-olefin and

c) 0.01 to 6.25 mol-% of structural units of the formula (1 a)

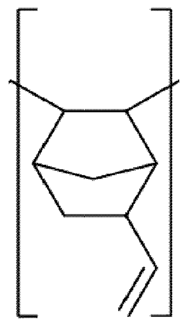

(1a)

wherein the sum of the structural units contained in the copolymer rubber is 100 mol%
ii) at least one monomer of the formula (2)

$$H_2C=CH-R^* \qquad (2)$$

wherein R* means a heteroatom containing group as mentioned above.

### Catalysts:

In the process of the present invention, the catalysts or catalyst precursors preferably used are transition metal complex carbenes or transition metal complex compounds which form transition metal carbenes under the reaction conditions or transition metal salts in combination with an alkylating agent. These catalysts can be either ionic or nonionic.
Suitable catalysts for the process of the present invention are compounds of the general formula (A)

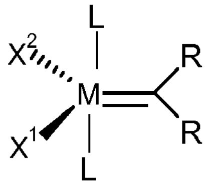

(A)

where

M is osmium or ruthenium,

the radicals R are identical or different and are each an alkyl, preferably $C_1$-$C_{30}$-alkyl, cycloalkyl, preferably $C_3$-$C_{20}$-cycloalkyl, alkenyl, preferably $C_2$-$C_{20}$-alkenyl, alkynyl, preferably $C_2$-$C_{20}$-alkynyl, aryl, preferably $C_6$-$C_{24}$-aryl, carboxylate, preferably $C_1$-$C_{20}$-carboxylate, alkoxy, preferably $C_1$-$C_{20}$-alkoxy, alkenyloxy, preferably $C_2$-$C_{20}$-alkenyloxy, alkynyloxy, preferably $C_2$-$C_{20}$-alkynyloxy, aryloxy, preferably $C_6$-$C_{24}$-aryloxy, alkoxycarbonyl, preferably $C_2$-$C_{20}$-alkoxycarbonyl, alkylamino, preferably $C_1$-$C_{30}$-alkylamino, alkylthio, preferably $C_1$-$C_{30}$-alkylthio, arylthio, preferably $C_6$-$C_{24}$-arylthio, alkylsulphonyl, preferably $C_1$-$C_{20}$-alkylsulphonyl, or alkylsulphinyl, preferably $C_1$-$C_{20}$-alkylsulphinyl radical, each of which may optionally be substituted by one or more alkyl, halogen, alkoxy, aryl or heteroaryl radicals,

$X^1$ and $X^2$ are identical or different and are two ligands, preferably anionic ligands, and

L represents identical or different ligands, preferably uncharged electron donors.

In the catalysts of the general formula (A), $X^1$ and $X^2$ are identical or different and are two ligands, preferably anionic ligands.

$X^1$ and $X^2$ can be, for example, hydrogen, halogen, pseudohalogen, straight-chain or branched $C_1$-$C_{30}$-alkyl, $C_6$-$C_{24}$-aryl, $C_1$-$C_{20}$-alkoxy, $C_6$-$C_{24}$-aryloxy, $C_3$-$C_{20}$-alkyldiketonate, $C_6$-$C_{24}$-aryldiketonate, $C_1$-$C_{20}$-carboxylate, $C_1$-$C_{20}$-alkylsulphonate, $C_6$-$C_{24}$-arylsulphonate, $C_1$-$C_{20}$-alkylthiol, $C_6$-$C_{24}$-arylthiol, $C_1$-$C_{20}$-alkylsulphonyl or $C_1$-$C_{20}$-alkylsulphinyl radicals.

The abovementioned radicals $X^1$ and $X^2$ can also be substituted by one or more further radicals, for example by halogen, preferably fluorine, $C_1$-$C_{10}$-alkyl, $C_1$-$C_{10}$-alkoxy or $C_6$-$C_{24}$-aryl, where these radicals may also in turn be substituted by one or more substituents selected from the group consisting of halogen, preferably fluorine, $C_1$-$C_5$-alkyl, $C_1$-$C_5$-alkoxy and phenyl.

In a preferred embodiment, $X^1$ and $X^2$ are identical or different and are each halogen, in particular fluorine, chlorine, bromine or iodine, benzoate, $C_1$-$C_5$-carboxylate, $C_1$-$C_5$-alkyl, phenoxy, $C_1$-$C_5$-alkoxy, $C_1$-$C_5$-alkylthiol, $C_6$-$C_{24}$-arylthiol, $C_6$-$C_{24}$-aryl or $C_1$-$C_5$-alkylsulphonate.

In a particularly preferred embodiment, $X^1$ and $X^2$ are identical and are each halogen, in particular chlorine, $CF_3COO$, $CH_3COO$, $CFH_2COO$, $(CH_3)_3CO$, $(CF_3)_2(CH_3)CO$, $(CF_3)(CH_3)_2CO$, PhO (phenoxy), MeO (methoxy), EtO (ethoxy), tosylate ($p$-$CH_3$-$C_6H_4$-$SO_3$), mesylate (2,4,6-trimethylphenyl) or $CF_3SO_3$ (trifluoromethanesulphonate).

In the general formula (A), L represents identical or different ligands, preferably uncharged electron donors.

The two ligands L can, for example, each be, independently of one another, a phosphine, sulphonated phosphine, phosphate, phosphinite, phosphonite, arsine, stibine, ether, amine, amide, sulphoxide, carboxyl, nitrosyl, pyridine, thioether or imidazolidine ("Im") ligand.

Preference is given to the two ligands L each being, independently of one another, a $C_6$-$C_{24}$-arylphosphine, $C_1$-$C_5$-alkylphosphine or $C_3$-$C_{20}$-cycloalkylphosphine ligand, a sulphonated $C_6$-$C_{24}$-arylphosphine or $C_1$-$C_{10}$-alkylphosphine ligand, a $C_6$-$C_{24}$-aryl phosphinite or $C_1$-$C_{10}$-alkyl phosphinite ligand, a $C_6$-$C_{24}$-aryl phosphonite or $C_1$-$C_{10}$-alkyl phosphonite ligand, a $C_6$-$C_{24}$-aryl phosphite or $C_1$-$C_{10}$-alkylphosphite ligand, a $C_6$-$C_{24}$-arylarsine or $C_1$-$C_{10}$-alkylarsine ligand, a $C_6$-$C_{24}$-arylamine or $C_1$-$C_{10}$-alkylamine ligand, a pyridine ligand, a $C_6$-$C_{24}$-aryl sulphoxide or $C_1$-$C_{10}$-alkyl sulphoxide ligand, a $C_6$-$C_{24}$-aryl ether or $C_1$-$C_{10}$-alkyl ether ligand or a $C_6$-$C_{24}$-arylamide or $C_1$-$C_{10}$-alkylamide ligand, each of which may be substituted by a phenyl group which may in turn be substituted by a halogen, $C_1$-$C_5$ alkyl radical or $C_1$-$C_5$-alkoxy radical.

The term phosphine includes, for example, $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(P\text{-}CF_3C_6H_4)_3$, $P(C_6H_4\text{-}SO_3Na)_3$, $P(CH_2C_6H_4\text{-}SO_3Na)_3$, P(iso-Pr)$_3$, $P(CHCH_3(CH_2CH_3))_3$, P(cyclopentyl)$_3$, P(cyclohexyl)$_3$, P(neopentyl)$_3$ and P(neophenyl)$_3$.

Phosphinite includes, for example, triphenyl phosphinite, tricyclohexyl phosphinite, triisopropyl phosphinite and methyl diphenylphosphinite.

Phosphite includes, for example, triphenyl phosphite, tricyclohexyl phosphite, tri-tert-butyl phosphite, triisopropyl phosphite and methyl diphenyl phosphate.

Stibine includes, for example, triphenylstibine, tricyclohexylstibine and trimethylstibene.

Sulphonate includes, for example, trifluoromethanesulphonate, tosylate and mesylate.

Sulphoxide includes, for example, $CH_3S(=O)CH_3$ and $(C_6H_5)_2SO$.

Thioether includes, for example, $CH_3SCH_3$, $C_6H_5SCH_3$, $CH_3OCH_2CH_2SCH_3$ and tetrahydrothiophene.

The imidazolidine radical (Im) usually has a structure of the general formula (A1) or (A2),

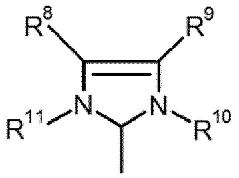

A1

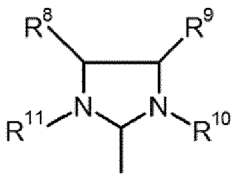

A2

where

$R^8$, $R^9$, $R^{10}$, $R^{11}$ are identical or different and are each hydrogen, straight-chain or branched $C_1$-$C_{30}$-alkyl, $C_3$-$C_{20}$-cycloalkyl, $C_2$-$C_{20}$-alkenyl, $C_2$-$C_{20}$-alkynyl, $C_6$-$C_{24}$-aryl, $C_1$-$C_{20}$-carboxylate, $C_1$-$C_{20}$-alkoxy, $C_2$-$C_{20}$-alkenyloxy, $C_2$-$C_{20}$-alkynyloxy, $C_6$-$C_{20}$-aryloxy, $C_2$-$C_{20}$-alkoxycarbonyl, $C_1$-$C_{20}$-alkylthio, $C_6$-$C_{20}$-arylthio, $C_1$-$C_{20}$-alkylsulphonyl, $C_1$-$C_{20}$-alkylsulphonate, $C_6$-$C_{20}$-arylsulphonate or $C_1$-$C_{20}$-alkylsulphinyl.

If desired, one or more of the radicals $R^8$, $R^9$, $R^{10}$, $R^{11}$ can, independently of one another, be substituted by one or more substituents, preferably straight-chain or branched $C_1$-$C_{10}$-alkyl, $C_3$-$C_8$-cycloalkyl, $C_1$-$C_{10}$-alkoxy or $C_6$-$C_{24}$-aryl, with these abovementioned substituents in turn being able to be substituted by one or more radicals, preferably selected from the group consisting of halogen, in particular chlorine or bromine, $C_1$-$C_5$-alkyl, $C_1$-$C_5$-alkoxy and phenyl.

In a preferred embodiment of the catalysts of the general formula (A), $R^8$ and $R^9$ are each, independently of one another, hydrogen, $C_6$-$C_{24}$-aryl, particularly preferably phenyl, straight-chain or branched $C_1$-$C_{10}$-alkyl, particularly preferably propyl or butyl, or together form, with inclusion of the carbon atoms to which they are bound, a cycloalkyl or aryl radical, where all the above mentioned radicals may in turn be substituted by one or more further radicals selected from the group consisting of straight-chain or branched $C_1$-$C_{10}$-alkyl, $C_1$-$C_{10}$-alkoxy, $C_6$-$C_{24}$-aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In a preferred embodiment of the catalysts of the general formula (A), the radicals $R^{10}$ and $R^{11}$ are identical or different and are each straight-chain or branched $C_1$-$C_{10}$-alkyl, particularly preferably i-propyl or neopentyl, $C_3$-$C_{10}$-cycloalkyl, preferably adamantyl, $C_6$-$C_{24}$-aryl, particularly preferably phenyl, $C_1$-$C_{10}$-alkylsulphonate, particularly preferably methanesulphonate, $C_6$-$C_{10}$-arylsulphonate, particularly preferably p-toluenesulphonate.

Radicals $R^{10}$ and $R^{11}$ of the abovementioned type may optionally be substituted by one or more further radicals selected from the group consisting of straight-chain or branched $C_1$-$C_5$-alkyl, in particular methyl, $C_1$-$C_5$-alkoxy, aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In particular, the radicals $R^{10}$ and $R^{11}$ may be identical or different and are each i-propyl, neopentyl, adamantyl or mesityl.

A variety of representatives of the catalysts of the formula (A) are known in principle, e.g. from WO-A-96/04289 and WO-A-97/06185.

Particular preference is given to both ligands L in the general formula (A) being identical or different trialkylphosphine ligands in which at least one of the alkyl groups is a secondary alkyl group or a cycloalkyl group, preferably isopropyl, isobutyl, sec-butyl, neopentyl, cyclopentyl or cyclohexyl.

Particular preference is given to one ligand L in the general formula (A) being a trialkylphosphine ligand in which at least one of the alkyl groups is a secondary alkyl group or a cycloalkyl group, preferably isopropyl, isobutyl, sec-butyl, neopentyl, cyclopentyl or cyclohexyl.

Two catalysts of the formula (A) which are preferred for the process of the present invention have the structures (III) (so called Grubbs (I) catalyst) and (IV) (so called Grubbs (II) catalyst), where Cy is cyclohexyl.

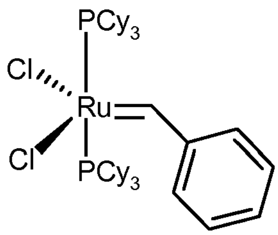

(III)

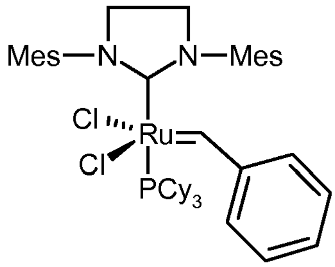

(IV)

Further suitable metathesis catalysts which are may be used for the process of the present invention are catalysts of the general formula (B),

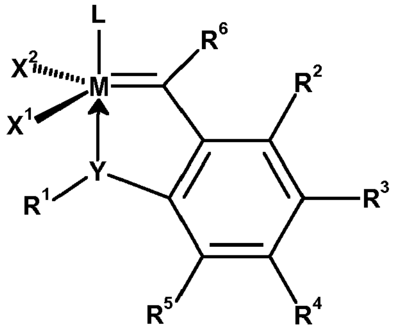

**(B)**

where

| | |
|---|---|
| M | is ruthenium or osmium, |
| Y | is oxygen (O), sulphur (S), an N-$R^1$ radical or a P-$R^1$ radical, where $R^1$ is as defined below, |
| $X^1$ and $X^2$ | are identical or different ligands, |
| $R^1$ | is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical, each of which may optionally be substituted by one or more alkyl, halogen, alkoxy, aryl or heteroaryl radicals, |
| $R^2$, $R^3$, $R^4$ and $R^5$ | are identical or different and are each hydrogen, organic or inorganic radicals, |
| $R^6$ | is hydrogen or an alkyl, alkenyl, alkynyl or aryl radical and |
| L | is a ligand which has the same meanings given for the formula (A) as already given above. |

The catalysts of the general formula (B) are known in principle. Representatives of this class of compounds are the catalysts described by Hoveyda et al. in US 2002/0107138 A1 and Angew Chem. Int. Ed. 2003, 42, 4592, and the catalysts described by Grela in WO-A-2004/035596, Eur. J. Org. Chem 2003, 963-966 and Angew. Chem. Int. Ed. 2002, 41, 4038 and in J. Org. Chem. 2004, 69, 6894-96 and Chem. Eur. J 2004, 10, 777-784. The catalysts are commercially available or can be prepared as described in the references cited.

In the catalysts of the general formula (B), L is a ligand which usually has an electron donor function and can have the same general, preferred and particularly preferred meanings as L in the general formula (A).

Furthermore, L in the general formula (B) is preferably a $P(R^7)_3$ radical, where the radicals $R^7$ are each, independently of one another, $C_1$-$C_6$-alkyl, $C_3$-$C_8$-cycloalkyl or aryl or else a substituted or unsubstituted imidazolidine radical ("Im").

$C_1$-$C_6$-Alkyl is, for example, methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl or n-hexyl.

$C_3$-$C_8$-Cycloalkyl encompasses cyclopropyl, cyclobutyl, cyclopentyl, cyclohexyl, cycloheptyl and cyclooctyl.

Aryl encompasses an aromatic radical having from 6 to 24 skeletal carbon atoms. Preferred monocyclic, bicyclic or tricyclic carbocyclic aromatic radicals having from 6 to 10 skeletal carbon atoms are, for example, phenyl, biphenyl, naphthyl, phenanthrenyl and anthracenyl.

The imidazolidine radical (Im) usually has a structure of the general formula (A1) or (A2), as given above already for formula (A).

In a preferred embodiment of the catalysts of the general formula (B), $R^8$ and $R^9$ of the formula (A1) or (A2) are each, independently of one another, hydrogen, $C_6$-$C_{24}$-aryl, particularly preferably phenyl, straight-chain or branched $C_1$-$C_{10}$-alkyl, particularly preferably propyl or butyl, or together form, with inclusion of the carbon atoms to which they are bound, a cycloalkyl or aryl radical, where all the above mentioned radicals may in turn be substituted by one or more further radicals selected from the group consisting of straight-chain or branched $C_1$-$C_{10}$-alkyl, $C_1$-$C_{10}$-alkoxy, $C_6$-$C_{24}$-aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In a preferred embodiment of the novel catalysts of the general formula (B), the radicals $R^{10}$ and $R^{11}$ of the formula (A1) or (A2) are identical or different and are each straight-chain or branched $C_1$-$C_{10}$-alkyl, particularly preferably i-propyl or neopentyl, $C_3$-$C_{10}$-cycloalkyl, preferably adamantyl, $C_6$-$C_{24}$-aryl, particularly preferably phenyl, $C_1$-$C_{10}$-alkylsulphonate, particularly preferably methanesulphonate, $C_6$-$C_{10}$-arylsulphonate, particularly preferably p-toluenesulphonate.

Radicals $R^{10}$ and $R^{11}$ of the formula (A1) or (A2) of the abovementioned type may optionally be substituted by one or more further radicals selected from the group consisting of straight-chain or branched $C_1$-$C_5$-alkyl, in particular methyl, $C_1$-$C_5$-alkoxy, aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In particular, the radicals $R^{10}$ and $R^{11}$ of the formula (A1) or (A2) may be identical or different and are each i-propyl, neopentyl, adamantyl or mesityl.

Particularly preferred imidazolidine radicals (Im) have the following structures (Va-f), where Mes is in each case a 2,4,6-trimethylphenyl radical.

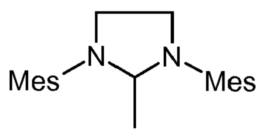

(Va)

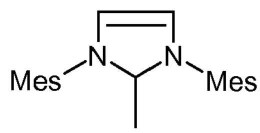

(Vb)

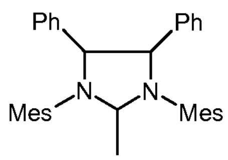

(Vc)

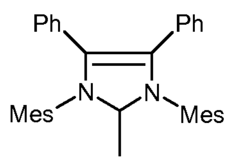

(Vd)

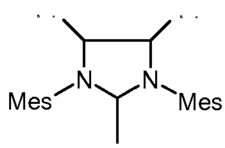

(Ve)

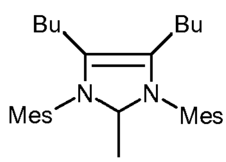

(Vf)

In the catalysts of the general formula (B), $\mathbf{X^1}$ and $\mathbf{X^2}$ are identical or different and can be, for example, hydrogen, halogen, pseudo halogen, straight-chain or branched $C_1$-$C_{30}$-alkyl, $C_6$-$C_{24}$-aryl, $C_1$-$C_{20}$-alkoxy, $C_6$-$C_{24}$-aryloxy, $C_3$-$C_{20}$-alkyldiketonate, $C_6$-$C_{24}$-aryldiketonate, $C_1$-$C_{20}$-carboxylate, $C_1$-$C_{20}$-alkylsulphonate, $C_6$-$C_{24}$-arylsulphonate, $C_1$-$C_{20}$-alkylthiol, $C_6$-$C_{24}$-arylthiol, $C_1$-$C_{20}$-alkylsulphonyl or $C_1$-$C_{20}$-alkylsulphinyl.

The abovementioned radicals $X^1$ and $X^2$ can also be substituted by one or more further radicals, for example by halogen, preferably fluorine, $C_1$-$C_{10}$-alkyl, $C_1$-$C_{10}$-alkoxy or $C_6$-$C_{24}$-aryl radicals, where the latter radicals may also in turn be substituted by one or more substituents selected from the group consisting of halogen, preferably fluorine, $C_1$-$C_5$-alkyl, $C_1$-$C_5$-alkoxy and phenyl.

In a preferred embodiment, $X^1$ and $X^2$ are identical or different and are each halogen, in particular fluorine, chlorine, bromine or iodine, benzoate, $C_1$-$C_5$-carboxylate, $C_1$-$C_5$-alkyl, phenoxy, $C_1$-$C_5$-alkoxy, $C_1$-$C_5$-alkylthiol, $C_6$-$C_{24}$-arylthiol, $C_6$-$C_{24}$-aryl or $C_1$-$C_5$-alkylsulphonate.

In a particularly preferred embodiment, $X^1$ and $X^2$ are identical and are each halogen, in particular chlorine, $CF_3COO$, $CH_3COO$, $CFH_2COO$, $(CH_3)_3CO$, $(CF_3)_2(CH_3)CO$, $(CF_3)(CH_3)_2CO$, PhO (phenoxy), MeO (methoxy), EtO

(ethoxy), tosylate ($p-CH_3-C_6H_4-SO_3$), mesylate (2,4,6-trimethylphenyl) or $CF_3SO_3$ (trifluoromethanesulphonate).

In the general formula (B), the radical $R^1$ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals.

The radical $R^1$ is usually a $C_1$-$C_{30}$-alkyl, $C_3$-$C_{20}$-cycloalkyl, $C_2$-$C_{20}$-alkenyl, $C_2$-$C_{20}$-alkynyl, $C_6$-$C_{24}$-aryl, $C_1$-$C_{20}$-alkoxy, $C_2$-$C_{20}$-alkenyloxy, $C_2$-$C_{20}$-alkynyloxy, $C_6$-$C_{24}$-aryloxy, $C_2$-$C_{20}$-alkoxycarbonyl, $C_1$-$C_{20}$-alkylamino, $C_1$-$C_{20}$-alkylthio, $C_6$-$C_{24}$-arylthio, $C_1$-$C_{20}$-alkylsulphonyl or $C_1$-$C_{20}$-alkylsulphinyl radical, each of which may optionally be substituted by one or more alkyl, halogen, alkoxy, aryl or heteroaryl radicals.

$R^1$ is preferably a $C_3$-$C_{20}$-cylcoalkyl radical, a $C_6$-$C_{24}$-aryl radical or a straight-chain or branched $C_1$-$C_{30}$-alkyl radical, with the latter optionally being able to be interrupted by one or more double or triple bonds or one or more heteroatoms, preferably oxygen or nitrogen. $R^1$ is particularly preferably a straight-chain or branched $C_1$-$C_{12}$-alkyl radical.

The $C_3$-$C_{20}$-cycloalkyl radical encompasses, for example, cyclopropyl, cyclobutyl, cyclopentyl, cyclohexyl, cycloheptyl and cyclooctyl.

The $C_1$-$C_{12}$-alkyl radical can be, for example, methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, n-hexyl, n-heptyl, n-octyl, n-decyl or n-dodecyl. In particular, $R^1$ is methyl or isopropyl.

The $C_6$-$C_{24}$-aryl radical is an aromatic radical having from 6 to 24 skeletal carbon atoms. As preferred monocyclic, bicyclic or tricyclic carbocyclic aromatic radicals having from 6 to 10 skeletal carbon atoms, mention may be made by way of example of phenyl, biphenyl, naphthyl, phenanthrenyl or anthracenyl.

In the general formula (B), the radicals $R^2$, $R^3$, $R^4$ and $R^5$ are identical or different and can be hydrogen, organic or inorganic radicals.

In a preferred embodiment, $R^2$, $R^3$, $R^4$, $R^5$ are identical or different and are each hydrogen, halogen, nitro, $CF_3$ or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, alkoxy, halogen, aryl or heteroaryl radicals.

$R^2$, $R^3$, $R^4$, $R^5$ are usually identical or different and are each hydrogen, halogen, preferably chlorine or bromine, nitro, $CF_3$ or a $C_1$-$C_{30}$-alkyl, $C_3$-$C_{20}$-cylcoalkyl, $C_2$-$C_{20}$-alkenyl, $C_2$-$C_{20}$-alkynyl, $C_6$-$C_{24}$-aryl, $C_1$-$C_{20}$-alkoxy, $C_2$-$C_{20}$-alkenyloxy, $C_2$-$C_{20}$-alkynyloxy, $C_6$-$C_{24}$-aryloxy, $C_2$-$C_{20}$-alkoxycarbonyl, $C_1$-$C_{20}$-alkylamino, $C_1$-$C_{20}$-alkylthio, $C_6$-$C_{24}$-arylthio, $C_1$-$C_{20}$-alkylsulphonyl or $C_1$-$C_{20}$-alkylsulphinyl radical, each of which may optionally be substituted by one or more $C_1$-$C_{30}$-alkyl, $C_1$-$C_{20}$-alkoxy, halogen, $C_6$-$C_{24}$-aryl or heteroaryl radicals.

In a particularly useful embodiment, $R^2$, $R^3$, $R^4$, $R^5$ are identical or different and are each nitro, a straight-chain or branched $C_1$-$C_{30}$-alkyl, $C_5$-$C_{20}$-cycloalkyl, straight-chain or branched $C_1$-$C_{20}$-alkoxy radical or a $C_6$-$C_{24}$-aryl radical, preferably phenyl or naphthyl. The $C_1$-$C_{30}$-alkyl radicals and $C_1$-$C_{20}$-alkoxy radicals may optionally be interrupted by one or more double or triple bonds or one or more heteroatoms, preferably oxygen or nitrogen.

Furthermore, two or more of the radicals $R^2$, $R^3$, $R^4$ or $R^5$ can also be bridged via aliphatic or aromatic structures. For example, $R^3$ and $R^4$ can, with inclusion of the carbon atoms to which they are bound in the phenyl ring of the formula (B), form a fused-on phenyl ring so that overall a naphthyl structure results.

In the general formula (B), $R^6$ is preferably hydrogen or a $C_1$-$C_{30}$-alkyl, $C_2$-$C_{20}$-alkenyl, $C_2$-$C_{20}$-alkynyl or $C_6$-$C_{24}$-aryl radical. $R^6$ is particularly preferably hydrogen.

Particularly suitable catalysts for the catalyst system of the invention are catalysts of the general formula (B1)

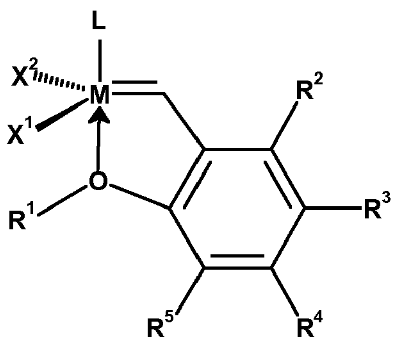

(B 1)

where

M, L, $X^1$, $X^2$, $R^1$, $R^2$, $R^3$, $R^4$ and $R^5$ can have the general, preferred and particularly preferred meanings given for the general formula (B).

These catalysts are known in principle, for example from US 2002/0107138 A1 (Hoveyda et al.), and can be obtained by preparative methods indicated there.

Particular preference is given to catalysts of the general formula (B1) in which

| | |
|---|---|
| M | is ruthenium, |
| $X^1$ and $X^2$ | are both halogen, in particular, both chlorine, |
| $R^1$ | is a straight-chain or branched $C_1$-$C_{12}$-alkyl radical, |
| $R^2$, $R^3$, $R^4$, $R^5$ | have the general and preferred meanings given for the general formula (B) and |
| L | has the general and preferred meanings given for the general formula (B). |

Very particular preference is given to catalysts of the general formula (B1) in which

| | |
|---|---|
| M | is ruthenium, |
| $X^1$ and $X^2$ | are both chlorine, |
| $R^1$ | is an isopropyl radical, |
| $R^2$, $R^3$, $R^4$, $R^5$ | are all hydrogen and |
| L | is a substituted or unsubstituted imidazolidine radical of the formula (A1) or (A2), |

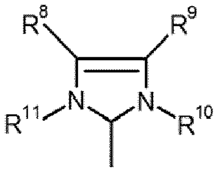
A1

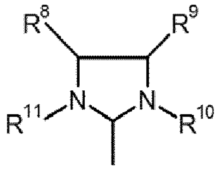
A2

where
$R^8$, $R^9$, $R^{10}$, $R^{11}$ are identical or different and are each hydrogen, straight-chain or branched $C_1$-$C_{30}$-alkyl, $C_3$-$C_{20}$-cycloalkyl, $C_2$-$C_{20}$-alkenyl, $C_2$-$C_{20}$-alkynyl, $C_6$-$C_{24}$-aryl, $C_1$-$C_{20}$-carboxylate, $C_1$-$C_{20}$-alkoxy, $C_2$-$C_{20}$-alkenyloxy, $C_2$-$C_{20}$-alkynyloxy, $C_6$-$C_{24}$-aryloxy, $C_2$-$C_{20}$-alkoxycarbonyl, $C_1$-$C_{20}$-alkylthio, $C_6$-$C_{24}$-arylthio, $C_1$-$C_{20}$-alkylsulphonyl, $C_1$-$C_{20}$-alkylsulphonate, $C_6$-$C_{24}$-arylsulphonate or $C_1$-$C_{20}$-alkylsulphinyl.

As catalyst coming under the general structural formula (B1) for the catalyst systems of the invention, especial preference is given to those of the formula (VI), where Mes is in each case a 2,4,6-trimethylphenyl radical.

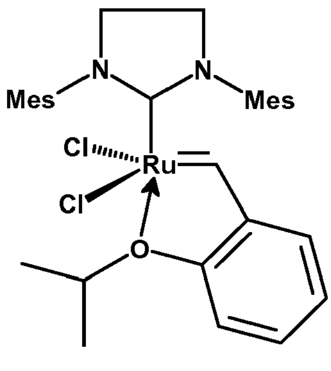

(VI)

This catalyst is also referred to in the literature as "Hoveyda catalyst".

Further suitable catalysts which come under the general structural formula (B1) are those of the following formulae (VII), (VIII), (IX), (X), (XI), (XII), (XIII) and (XVII), where Mes is in each case a 2,4,6-trimethylphenyl radical.

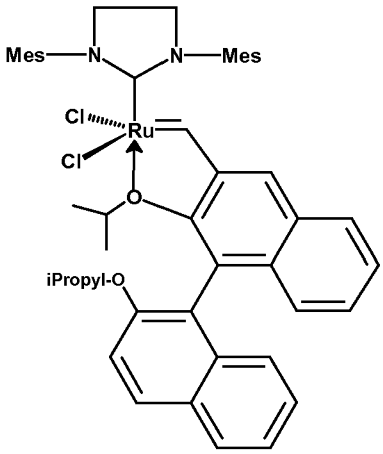

(VII)

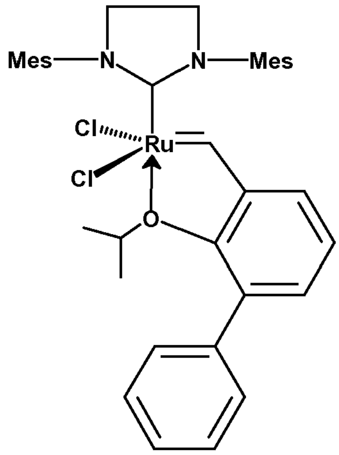

(VIII)

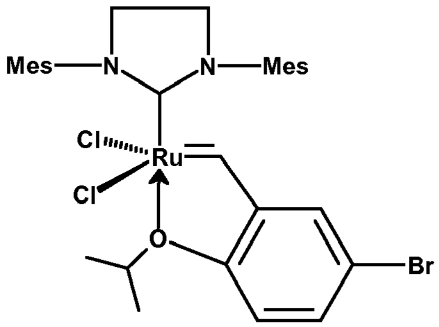

(IX)

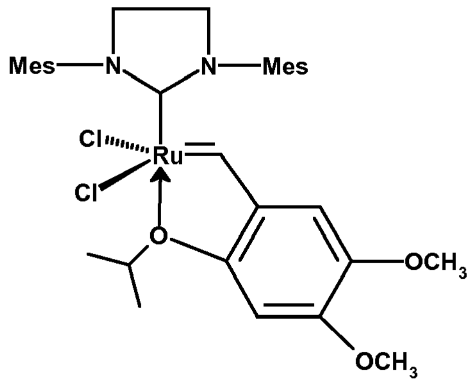

(X)

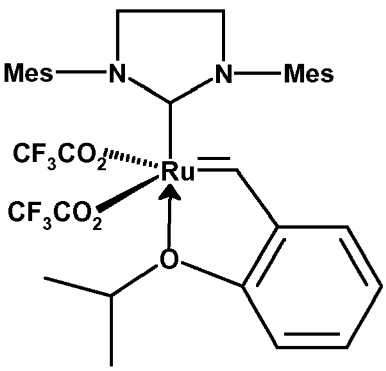

(XI)

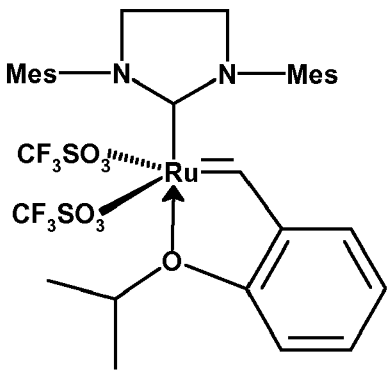

(XII)

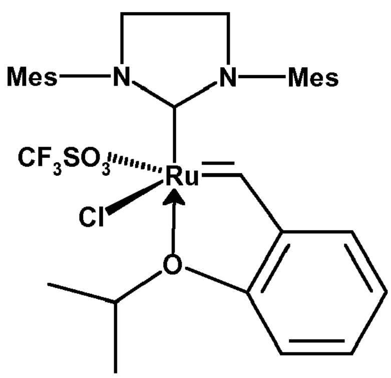

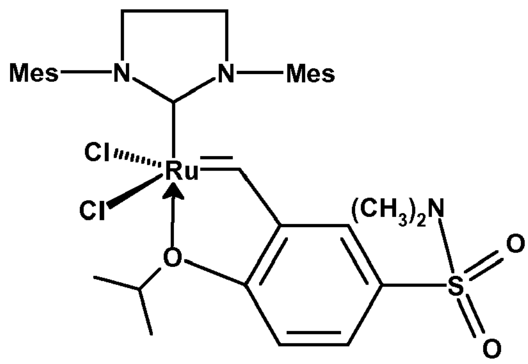

(XIII) (XVII)

Further suitable metathesis catalysts for the process of the present invention are catalysts of the general formula (B2)

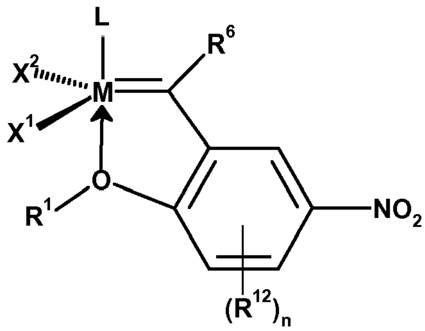

(B2)

where

| | |
|---|---|
| M, L, $X^1$, $X^2$, $R^1$ and $R^6$ | have the general and preferred meanings given for the formula (B), |
| $R^{12}$ | are identical or different and have the general and preferred meanings given for the radicals $R^2$, $R^3$, $R^4$ and $R^5$ in the formula (B), with the exception of hydrogen, and |
| n | is 0, 1, 2 or 3. |

These catalysts are known in principle, for example from WO-A-2004/035596 (Grela), and can be obtained by the preparative methods indicated there.

Particular preference is given to catalysts of the general formula (B2) in which

| | |
|---|---|
| M | is ruthenium, |
| $X^1$ and $X^2$ | are both halogen, in particular both chlorine, |
| $R^1$ | is a straight-chain or branched $C_1$-$C_{12}$-alkyl radical, |
| $R^{12}$ | has the meanings given for the general formula (B), |
| n | is 0, 1, 2 or 3, |
| $R^6$ | is hydrogen and |
| L | has the meanings given for the general formula (B). |

Very particular preference is given to catalysts of the general formula (B2) in which

M is ruthenium,

$X^1$ and $X^2$ are both chlorine,

$R^1$ is an isopropyl radical,

n is 0 and

L is a substituted or unsubstituted imidazolidine radical of the formula (A1) or (A2),

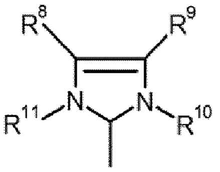

A1

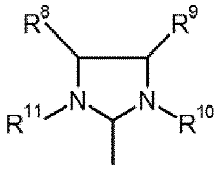

A2

where
$R^8$, $R^9$, $R^{10}$, $R^{11}$ are identical or different and are each hydrogen, straight-chain or branched, cyclic or acyclic $C_1$-$C_{30}$-alkyl, $C_2$-$C_{20}$-alkenyl, $C_2$-$C_{20}$-alkynyl, $C_6$-$C_{24}$-aryl, $C_1$-$C_{20}$-carboxylate, $C_1$-$C_{20}$-alkoxy, $C_2$-$C_{20}$-alkenyloxy, $C_2$-$C_{20}$-alkynyloxy, $C_6$-$C_{24}$-aryloxy, $C_2$-$C_{20}$-alkoxycarbonyl, $C_1$-$C_{20}$-alkylthio, $C_6$-$C_{24}$-arylthio, $C_1$-$C_{20}$-alkylsulphonyl, $C_1$-$C_{20}$-alkylsulphonate, $C_6$-$C_{24}$-arylsulphonate or $C_1$-$C_{20}$-alkylsulphinyl.

A particularly suitable catalyst which comes under the general formula (B2) has the structure (XIV)

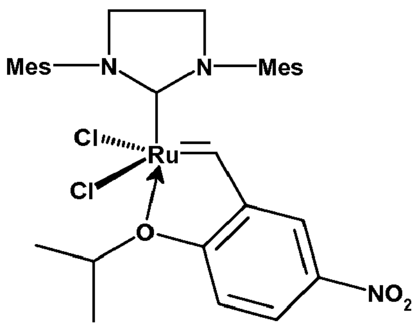

**(XIV)**

and is also referred to in the literature as "Grela catalyst".

Typically, 0.00001 to 0.1 moles, preferably 0.0001 to 0.04 moles, preferably 0.0005 to 0.02 moles of metathesis catalyst are charged to the reactor per mole of the structural unit (1a) of the copolymer charged to be functionalized.

The copolymer used for the manufacturing of the functionalized copolymer of the present invention has the same general and preferred meaning with respect to its chemical constitution like structural units derived from ethylene, the $\alpha$-olefin and its amounts or the amount of the structural unit (1a) which corresponds to the amount of the structural unit of the formula (1), or the average molecular weight Mn.

The meaning of R* of the olefin of the formula (2) has the same meaning as given above. Most preferred the olefins of the formula (2) wherein R* means preferably the radical -C(O)OR$^Y$, wherein R$^Y$ means hydrogen or hydrocarbyl having 1 to 12 carbon atoms that may not contain any heteroatoms or may contain heteroatoms from the list consisting of N, O, S and halogen, preferably ,methyl, ethyl, propyl, n-butyl, iso-butyl, t-butyl, pentyl, hexyl, octyl, decyl, dodeccyl, 2,3-epoxypropyl, 1H,1H,2H,2H-perfluorodecyl, polyethylenglykol methylether and 2-ethylhexyl, ethylene glycol methyl ether. Such formula (2) includes methyl acrylate, ethyl acrylate, glycidyl acrylate, tert-butyl acrylate, 1H,1H,2H,2H-perfluorodecyl acrylate, polyethylenglykol methyletheracrylate, 2-ethylhexyl acrylate, and ethylene glycol methyl ether acrylate.

Typically, from about 0.7 to about 15 preferably from about 1.0 to 10, and most preferably from about 1.2 to 7 moles of the olefin of the formula (2) are charged to the reactor per mole of the structural unit (1 a) of the copolymer charged to be functionalized.

The metathesis reaction of the present invention may be carried out as a slurry process or as a solution process.

Preferably the process of the present invention is typically a solution process, although it may be a bulk or high pressure process.

A process where at least 90 weight % of the total copolymer content including the unfunctionalized copolymer as well as the functionalized copolymer is soluble in the reaction media - so called Homogeneous processes - is preferred.

Suitable diluents/solvents for the process include non-coordinating, inert liquids. Examples include straight and branched-chain hydrocarbons such as isobutane, butane, pentane, isopentane, hexanes, isohexane, heptane, octane, dodecane, and mixtures thereof, cyclic and alicyclic hydrocarbons such as cyclohexane, cycloheptane, methylcyclohexane, methylcycloheptane, and mixtures thereof such as can be found commercially (Isopar®); perhalogenated hydrocarbons such as perfluorinated $C_{4-10}$ alkanes, dichloromethane, tetrahydrofurane and aromatic and alkylsubstituted or halogenated aromatic compounds such as benzene, toluene, mesitylene, xylene and chlorobenzene. Preferred solvents are, hexanes, toluene, dichloromethane, chlorobenzene.

The process may be batch, semi-batch or continuous. As used herein, the term continuous means a system that operates without interruption or cessation. For example, a continuous process to produce a polymer would be one where the reactants are continually introduced into one or more reactors and polymer product is continually withdrawn.

Useful reaction vessels include reactors (including continuous stirred tank reactors, batch reactors), reactive extruder, pipe or pump.

Typically, solutions of 0.01 to 20 wt%, preferably 0.5 to 15 wt%, preferably 1 to 10 wt% of the unfuctionalized copolymer in the solvent are charged to the reactor.

In general temperatures from 20 to 120° C, in particular from 40 to 80° C are employed for the metathesis.

Full conversion of the VNB unsaturation of the structural unit (1a) using a very low concentration of the metathesis catalyst has been observed by applying VNB EPDM terpolymer. Furthermore, only a low gel formation, preferably <5 % has been observed.

Thus, the process of the present invention preferably uses a terpolymer of ethylene, propylene and 5-vinyl-2-norbornene (VNB) or a quadpolymer of ethylene, propylene ethylidenenorbornene (ENB) and 5-vinyl-2-norbornene (VNB) as a starting copolymer, in which the double bond of the VNB derived unit (1a) is functionalized with a unsaturated derivative containing at least one group R*.

The present invention further relates to a vulcanizable polymer composite comprising beside at least one functionalized copolymer according to the present invention, at least one cross-linking agent and/or curing system. Furthermore the vulcanizable polymer composites might contain optionally at least one filler and optionally further auxiliary products for rubbers, preferably reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators.

Suitable ingredients customary in the rubber field are known to a person skilled in the art. Specific mention is made to cross-linking agents and/or curing systems, fillers and further auxiliary products for rubbers, such as reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators such as triethanolamine, polyethylene glycol, hexanetriol etc.

**Cross-linking agents and/or curing systems**

The polymer composite according to the present invention is not limited to a special cross-linking agent or curing system. Suitable curing systems are for example peroxide curing systems, sulfur curing systems, amine curing systems, UV curing systems, polyvalent epoxy curing systems, polyvalent isocyanate curing systems, aziridine curing systems, basic metal oxide curing systems or organometallic halide curing systems. Preferred curing systems are peroxide curing systems, sulfur curing systems, amine curing systems or UV curing systems. A particularly preferred cross-linking agent or curing system is a peroxide system.

**Peroxide curing system**

The present invention is not limited to a special peroxide cross-linking agent or curing system. For example, inorganic or organic peroxides are suitable. Useful organic peroxides include dialkylperoxides, ketalperoxides, aralkylperoxides, peroxide ethers, peroxide esters such as di-tert.-butylperoxide, 2,2'-bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy-3,3,5-trimethyl-cyclohexane, benzoylperoxide, tert.-butyl-cumylperoxide and tert.-butylperbenzoate.

Usually, the amount of peroxide in the polymer composite according to the present invention is in the range of

from 1 to 10 phr (= parts per hundred of rubber), preferably 1 to 8 phr.

Curing is usually performed at a temperature in the range of from 100 to 200 °C, preferably 130 to 180 °C. The peroxide might be applied advantageously in a polymer-bound form. Suitable systems are commercially available, such as Polydispersion T(VC) D-40 P from Rhein Chemie Rheinau GmbH, D (= polymer bound di-tert.-butylperoxy-isopropylbenzene).

**Sulfur curing system**

Sulfur curing is usually carried out with elemental sulfur or sulfur containing vulcanizing agents known in the art. Said sulfur containing vulcanizing agents usually contain sulfur in a heat-labile form. They liberate sulfur at the curing temperature (sulfur donors).

Sulfur donors can be subdivided into those that can be substituted directly for sulfur, without drastic change of the curing characteristics, and those that are simultaneously vulcanization accelerators. Products of the first type are for example dithiodimorpholine, and caprolactamdisulfide, N,N'-dithio bis-(hexahydro-2H-azepinone). For sulfur donors that are at the same time vulcanization accelerators, the vulcanization system should be properly modified, known by a person skilled in the art. Examples of sulfur donors that are at the same time vulcanization accelerators are 2-morpholino-dithio-benzothiazole, dipentamethylene thiuramtetrasulfide, N-oxydiethylene dithiocarbamyl-N'-oxyoxydiethylene sulfenamide as well as tetramethyl thiuram disulfide.

Preferred sulfur containing vulcanizing agents are benzothiazol disulfide, e.g. Vulkacit® DM/C, tetramethyl thiuram monosulfide, e.g. Vulkacit® Thiuram MS/C, tetramethyl thiuram disulfide, e.g. Vulkacit® Thiuram/C and mixtures thereof..

Sulfur or sulfur donors are used as curing agent usually in an amount of 0.25 to 5 parts by weight based on 100 parts by weight of the nitrile rubber, preferably 1.5 to 2.5 parts by weight based on 100 parts by weight of the nitrile rubber.

Usually, the sulfur or sulfur containing vulcanizing agents are used together with a vulcanization accelerator. Suitable vulcanization accelerators are known in the art. Examples are mercapto accelerators, sulfenamide accelerators, thiuram accelerators, dithiocarbamate accelerators, dithiocarbamyl sulfenamide accelerators, xanthate accelerators, guanidine accelerators, amine accelerators, thiourea accelerators, dithiophosphate accelerators and sulfur donors.

The vulcanization accelerators are usually employed in an amount of 0.5 to 1 parts by weight based on 100 parts by weight of the nitrile rubber. When the accelerator dosage is increased (for example 1.5 to 2.5 parts by weight based on 100 parts by weight of the nitrile rubber), the sulfur content should preferably be lowered.

Curing is preferably performed by heating the vulcanizable polymer composition to a temperature in the range of from about 130° to about 200°C, preferably from about 140° to about 190°C, more preferably from about 150° to about 180°C. Preferably, the heating is conducted for a period of from about 1 minutes to about 15 hours, more preferably from about 5 minutes to about 30 minutes.

It is possible and in some cases recommendable to perform a so-called post-curing at temperature in the range of from about 130° to about 200°C, preferably from about 140° to about 190°C, more preferably from about 150° to about 180°C for a period of up to 15 hours which is performed outside the die, e.g. by placing the vulcanizate, i.e. the respective form part, in a standard oven.

**Fillers**

Useful fillers may be active or inactive fillers or a mixture of both. The filler may be, for example:

- highly dispersed silicas, prepared e.g. by the precipitation of silicate solutions or the flame hydrolysis of silicon halides, preferably with specific surface areas in the range of from 5 to 1000 $m^2/g$, and with primary particle sizes in the range of from 10 to 400 nm; the silicas can optionally also be present as mixed oxides with other metal oxides such as those of Al, Mg, Ca, Ba, Zn, Zr and Ti;
- synthetic silicates, such as aluminium silicates and alkaline earth metal silicates like magnesium silicate or calcium silicate, preferably with BET specific surface areas in the range of from 20 to 400 $m^2/g$ and primary particle diameters in the range of from 10 to 400 nm;
- natural silicates, such as kaolin and other naturally occurring silicates;
- glass fibers and glass fiber products (matting extrudates) or glass microspheres;
- metal oxides, such as zinc oxide, calcium oxide, magnesium oxide and aluminium oxide;
- metal carbonates, such as magnesium carbonate, calcium carbonate and zinc carbonate;
- metal hydroxides, e.g. aluminium hydroxide and magnesium hydroxide;
- carbon blacks; the carbon blacks to be preferably used in the composites according to the present invention are prepared by the lamp black, furnace black or gas black process and have preferably BET (DIN 66 131) specific

surface areas in the range of from 20 to 200 $m^2/g$, e.g. SAF, ISAF, HAF, FEF or GPF carbon blacks;

- rubber gels, especially those based on polybutadiene, butadiene/styrene copolymers, butadiene/acrylonitrile copolymers and polychloroprene;

or mixtures thereof.

Examples of suitable mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the mineral can be silica, for example, silica made by carbon dioxide precipitation of sodium silicate. Dried amorphous silica particles suitable for use in accordance with the present invention may have a mean agglomerate particle size in the range of from 1 to 100 microns, for example between 10 and 50 microns or, for example between 10 and 25 microns. According to the present invention less than 10 percent by volume of the agglomerate particles should be below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil S and Vulkasil N, from Lanxess Deutschland GmbH.

Often, use of carbon black as a filler is advantageous. Usually, carbon black is present in the polymer composite in an amount of in the range of from 20 to 200 parts by weight, for example 30 to 150 parts by weight, or for example 40 to 100 parts by weight. Further, it might be advantageous to use a combination of carbon black and mineral filler in the inventive polymer composite. In this combination the ratio of mineral fillers to carbon black is usually in the range of from 0.05 to 20, or for example 0.1 to 10.

The polymer composite may advantageously further contain other natural or synthetic rubbers such as BR (polybutadiene), ABR (butadiene/acrylic acid-$C_1$-$C_4$-alkylester-copolymers), CR (polychloroprene), IR (polyisoprene), SBR (styrene/butadiene-copolymers), preferably with styrene contents in the range of 1 to 60 wt %, FKM (fluoropolymers or fluororubbers), and mixtures of the given polymers. Careful blending with said rubbers often reduces cost of the polymer composite without sacrificing the processability. The amount of natural and/or synthetic rubbers will depend on the process condition to be applied during manufacture of shaped articles and is readily available by few preliminary experiments.

**Further auxiliary products for rubbers**

Further auxiliary products for rubbers, are for example reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators such as triethanolamine, polyethylene glycol, hexanetriol etc.

The further auxiliary products for rubbers (rubber aids) are used in conventional amounts, which depend inter alia on the intended use. Conventional amounts are e.g. from 0.1 to 50 wt. %, based on rubber. For example, the composite can contain in the range of 0.1 to 20 phr of an organic fatty acid as an auxiliary product, such as a unsaturated fatty acid having one, two or more carbon double bonds in the molecule which can include 10% by weight or more of a conjugated diene acid having at least one conjugated carbon-carbon double bond in its molecule. For example, those fatty acids have in the range of from 8-22 carbon atoms, or for example 12-18. Examples include stearic acid, palmitic acid and oleic acid and their calcium-, zinc-, magnesium-, potassium- and ammonium salts. For example, the composition can contain in the range of 5 to 50 phr of an acrylate as an auxiliary product. Suitable acrylates are known from EP-A1-0 319 320, in particular p. 3, l. 16 to 35, from U.S. Pat. No. 5,208,294, Col. 2, l. 25 to 40, and from U.S. Pat. No. 4,983,678, Col. 2, l. 45 to 62. Reference is also made to zinc acrylate, zinc diacrylate or zinc dimethacrylate or a liquid acrylate, such as trimethylolpropanetrimethacrylate (TRIM), butanedioldimethacrylate (BDMA) and ethyleneglycoldimethacrylate (EDMA). It might be advantageous to use a combination of different acrylates and/or metal salts thereof. For example, to use metal acrylates in combination with a Scorch-retarder such as sterically hindered phenols (e.g. methyl-substituted aminoalkylphenols, in particular 2,6-di-tert.-butyl-4-dimethyl-aminomethylphenol).

The polymer composition according to the present invention can contain in the range of 0.1 to 50 phr of other vulcanization co-agents like e.g. Triallylisocyanurate (TAIC), N,N'-1,3-Phenylene bismaleimide or high vinyl content butadiene homopolymers or copolymers which serve as vulcanization coagents to enhance the degree of crosslinking of peroxide cured articles.

The ingredients of the final polymer composite can be mixed together, suitably at an elevated temperature that may range from 25 to 200 °C. Normally the mixing time does not exceed one hour and a time in the range from 2 to 30 minutes is usually adequate. If the polymer composite is prepared without solvent or was recovered from the solution,

the mixing can be suitably carried out in an internal mixer such as a Banbury mixer, or a Haake or Brabender miniature internal mixer. A two-roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (=scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

The functionalized copolymer according to the present invention as well as of the vulcanizable polymer composite comprising the functionalized copolymer according to the present invention, are ideally suited to be processed by but not limited to molding injection technology. The functionalized copolymer according to the present invention as well as the vulcanizable polymer composite can also be useful to transfer molding, to compression molding, to liquid injection molding. The functionalized copolymer according to the present invention or the vulcanizable polymer composite is usually introduced in a conventional injection molding and injected into hot preferably having a temperature of 160 to 230 °C forms where the cross-linking/vulcanization takes place depending on the polymer composite and temperature of the mold.

The functionalized copolymer according to the present invention as well as the polymer composition are very well suited for the manufacture of a shaped article, such as a seal, hose, bearing pad, stator, well head seal, valve plate, cable sheathing, wheel roller, pipe seal, in place gaskets or footwear component, preferably prepared by injection molding technology, compression molding, transfer molding, liquid injection molding, pressure free curing or combinations thereof. Furthermore, the inventive functionalized copolymer is very well suited for wire and cable production, especially via extrusion processes.

The present invention also relates to the use of the functionalized copolymer according to the present invention or the polymer composite according to the present invention for the preparation of a shaped article.

The present invention therefore further relates to a vulcanized rubber article made by vulcanizing the vulcanizable polymer composition according to the present invention.

Examples for shaped articles as well as examples for preparation processes for obtaining the shaped articles are mentioned above.

The present invention therefore further relates to a process for forming a vulcanized rubber article comprising the steps processing a vulcanizable polymer composition according to the present invention to form the final shape of the molded article and curing said polymer composition.

## EXAMPLES

It is understood that the present invention is operable in the presence of any component which has not been specifically disclosed and may be combined with any other suitable reaction or process in a multistep system design. The following examples are provided in order to further illustrate the invention and are not to be construed as limiting. Unless stated to the contrary, all parts and percentages are expressed on a weight or molar basis as indicated.

All reactions were performed under nitrogen atmosphere (using standard Schlenk technique or glove box). All reagents were used as received unless otherwise stated. Solvents were purified by MBraun SPS-800.

Grubbs Hoveyda second generation catalyst (II) was purchased from Sigma Aldrich. The Grubbs catalyst second generation (I) was obtained from Materia, Pasadena USA.

**Table 1: Characterization of used polar olefins.**

| No. | acrylate | molecular weight [g/mol] | supplier |
|---|---|---|---|
| 1 | ethyl acrylate | 100.12 | Sigma Aldrich |
| 2 | tert-butyl acrylate | 128.17 | Sigma Aldrich |
| 3 | glycidyl acrylate | 128.13 | ABCR |
| 4 | 1H,1H,2H,2H-perfluorodecyl acrylate | 518.17 | Sigma Aldrich |
| 5 | polyethylenglykol methylether acrylate | ~480 | Sigma Aldrich |
| 6 | 2-ethylhexyl acrylate | 184.28 | Sigma Aldrich |
| 7 | ethylene glycol methyl ether acrylate | 130.14 | Sigma Aldrich |

**Functionalization of EPDM with polar olefins**

An overview on all examples performed is given in the following table. In this table and in the following the inventive examples are marked with an asterisk "*".

**Characterization of the unfunctionalized copolymer:**

The unfunctionalized copolymer used as starting copolymer for the inventive examples 3*-19* was prepared according to WO 2005005496A2.

**Table 2: Characterization of the unfunctionalized copolymer.**

| EPDM | | | | | | |
|---|---|---|---|---|---|---|
| C2 | C3 | ENB | VNB | Mn | Mw | PDI |
| [wt%] | [wt%] | [wt%] | [wt%] | [kg/mol] | [kg/mol] | |
| 50 | 47 | - | 3 | 87 | 320 | 3.7 |

Table 3: Examples 1-19

| Ex | EPDM type | | | | | polar olefin | | catalyst | | Functionalization results | | | | | | |
|---|---|---|---|---|---|---|---|---|---|---|---|---|---|---|---|---|
| | C2 | C3 | ENB | VNB | amount | no. | amount | type | amount | time | conversion | gel content | Tg | Mn | Mw | PDI |
| | [mol%] | [mol%] | [mol%] | [mol%] | [g] | see table 1 | mole ratio to ENB/VNB unsaturation | | [mol%] to ENB/VNB unsaturation | [h] | [%] | [%] | °C | [kg/mol] | [kg/mol] | |
| 1 1) | 62.4 | 35.4 | 2.2 | - | 0.5 | 1 | 10 | I | 2 | 20 | <5 | n.d. | - | - | - | - |
| 2* 2) | 62.5 | 35.25 | 2.25 | - | 3 | 1 | 7 | I | 1 | 2 | <5 | n.d. | - | - | - | - |
| 3* | 61.92 | 37.23 | - | 0.85 | 3 | 1 | 10 | I | 1 | 2 | 100 | n.d. | -55.3 | 73 | 497 | 6.8 |
| 4* | 61.92 | 37.23 | - | 0.85 | 3 | - | - | I | 1 | 2 | - | 100 | " | " | " | " |
| 5* | 61.92 | 37.23 | - | 0.85 | 3 | 1 | 7 | I | 4 | 2 | 100 | 0.3 | " | " | " | " |
| 6* | 61.92 | 37.23 | - | 0.85 | 3 | 1 | 7 | I | 2 | 2 | 100 | n.d. | " | " | " | " |
| 7* | 61.92 | 37.23 | - | 0.85 | 3 | 1 | 7 | I | 1 | 2 | 100 | n.d. | " | " | " | " |
| 8* | 61.92 | 37.23 | - | 0.85 | 3 | 1 | 7 | I | 0.5 | 2 | 100 | 0.3 | " | " | " | " |
| 9* | 61.92 | 37.23 | - | 0.85 | 3 | 1 | 7 | I | 0.25 | 2 | 100 | n.d. | " | " | " | " |
| 10* | 61.92 | 37.23 | - | 0.85 | 3 | 1 | 7 | I | 0.125 | 2 | 99 | n.d. | " | " | " | " |
| 11* | 61.92 | 37.23 | - | 0.85 | 3 | 1 | 7 | I | 0.0625 | 2 | 75 | n.d. | " | " | " | " |
| 12* | 61.92 | 37.23 | - | 0.85 | 3 | 2 | 7 | I | 2 | 2 | 100 | n.d. | -54.8 | - | - | - |
| 13* | 61.92 | 37.23 | - | 0.85 | 3 | 3 | 7 | I | 1 | 2 | 75 | n.d. | -55.3 | - | - | - |
| 14* | 61.92 | 37.23 | - | 0.85 | 3 | 4 | 7 | I | 1 | 2 | 96 | n.d. | -55.5 | 84 | 472 | 5.7 |
| 15* 3) | 61.92 | 37.23 | - | 0.85 | 3 | 5 | 7 | I | 2 | 2 | 100 | n.d. | -58.3 | 79 | 320 | 4.1 |
| 16* | 61.92 | 37.23 | - | 0.85 | 3 | 6 | 7 | I | 1 | 2 | 100 | 0.12 | -56.4 | - | - | - |
| 17* | 61.92 | 37.23 | - | 0.85 | 3 | 7 | 7 | I | 1 | 2 | 100 | 0.12 | -55.5 | - | - | - |
| 18* | 61.92 | 37.23 | - | 0.85 | 3 | 1 | 7 | II | 2 | 2 | 100 | n.d. | - | - | - | - |
| 19* | 66.94 | 31.83 | - | 1.23 | 3 | 1 | 7 | I | 1 | 2 | 100 | n.d. | - | - | - | - |

1) DOW Nordel®IP 5565
2) Keltan® 6750
3) 100 °C

Non-inventive example 1 reproduction of example 1 of WO 2009009158

A solution of 0.5 g of NORDEL™ IP 5565 (ethylene/propylene/ethylidene norbornene EPDM interpolymer containing 7.5 wt% polymerized ethylidene norbornene) in 2 ml of chlorobenzene and 10 ml of dichloromethane was warmed to 35 °C under stirring. To this solution undiluted ethyl acrylate (0.31 g; 10 mol equiv) was added, followed by 0.005 g of (1,3-Bis-(2,4,6-trimetylphenyl)-2-imidazolidinylidene)dichloro(phenyl-methylene)(tricyclohexylphosphine)-ruthenium (Grubbs 2nd gen. catalyst) (0.02 mol equiv with respect to the ethylidene norbornene content of the EPDM polymer) in 1 ml of chlorobenzene. The resulting reaction mixture is stirred at 35 °C for 20 hours. After 20 h the reaction mixture is cooled to ambient temperature. To the solution 20 ml of methanol are added. The polymer precipitates and was isolated from the solvent by filtration. The filtrated polymer was washed with methanol and dried under reduced pressure at 90 °C to constant weight. The polymer was characterized by $^1$H-NMR.

**Inventive Example 2*-18***

**General** procedure

EPDM (see table 1, 2 wt% in Toluene) was placed in a flask with the particular acrylate (see table 1). The flask was equipped with a magnetic stirrer and heated to 40 °C. Then, the particular amount of Grubbs 2nd gen. catalyst was dissolved in 2 mL Toluene and added via a syringe to the flask. After 2 h the solution was cool down to room temperature and the reaction was quenched by addition of 2 mL of ethyl vinyl ether followed by stirring 15 min at room temperature. The reaction mixture was poured to a bowl and dried in a vacuum oven at 80 °C to constant weight. Conversion was determined by $^1$H-NMR.

**Measurement of the gel content**

A sample of the functionalized copolymer of 3 g ($W_0$) is cut into fine fragments (size: 0.5 mm x 0.5 mm x 0.5 mm). In a closed vessel, the sample is dissolved in 250 ml of toluene at 23 °C for 12 hours. Then, the sample is filtered (filter ($W_f$) 42 μm filter (325 mesh)) and the filter is dried at 90 °C until a constant weight ($W_1$) is reached.

$$Gels(\%) = \frac{W_1 - W_f}{W_0} \times 100$$

## Claims

1. A functionalized copolymer having an average molecular weight Mn of at least 50.000 g/mol containing

   a) structural units derived from ethylene
   b) structural units derived from at least one α-olefin and
   c) 0.01 to 6.25 mol-% of structural units of the formula (1)

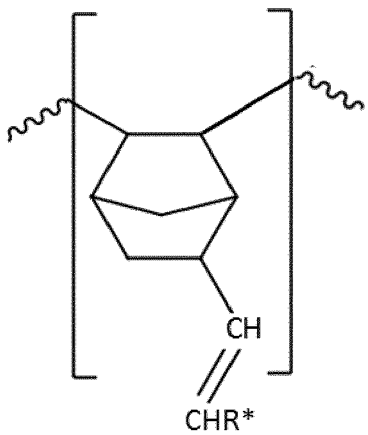

(1)

wherein R* means a heteroatom containing group, wherein the sum of the structural units contained in the copolymer rubber is 100 mol%.

2. The functionalized copolymer according to claim 1 having an average molecular weight Mn in the range of 50.000 to 1.500.000, in particular in the range of 50.000 to 1.000.000 g/mol.

3. The functionalized copolymer according to at least one of the claims 1 to 2 wherein it contains structural units derived from propylene.

4. The functionalized copolymer according to at least one of the claims 1 to 3 wherein R1 means is the rest of the following olefins of the formula $H_2C=CH-R^*$ selected from the group consisting of acrylonitrile, acrylamide, allyl amine, acrylic acid,methyl acrylate, ethyl acrylate, glycidyl acrylate, tert-butyl acrylate, 1H,1H,2H,2H-perfluorodecyl acrylate, polyethylenglykol methyletheracrylate, 2-ethylhexyl acrylate and ethylene glycol methyl ether acrylate.

5. The functionalized copolymer according to at least one of the claims 1 to 4 wherein it contains at least one structural units derived from a non-conjugated diene selected from the group consisting of dicyclopentadiene, 1,4-hexadiene, 5-methylene-2-norbornene, 5-vinyl-2-norbornene (VNB) and 5-ethylidene-2-norbornene (ENB), preferably selected from the group consisting of 5-ethylidene-2-norbornene and 5-vinyl-2-norbornene (VNB), in particular 5-vinyl-2-norbornene.

6. A process for the manufacturing of a functionalized copolymer according to at least one of the claims 1 to 5, the steps of the process comprising contacting a metathesic catalyst with a composition comprising:

i) at least one copolymer comprising

a) structural units derived from ethylene
b) structural units derived from at least one $\alpha$-olefin and
c) 0.01 to 6.25 mol-% of structural units of the formula (1 a)

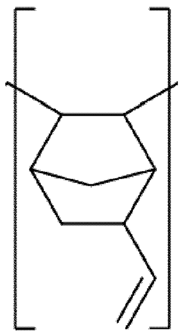

(1a)

wherein the sum of the structural units contained in the copolymer rubber is 100 mol%,

ii) at least one monomer of the formula (2)

$$H_2C=CH-R^* \qquad (2)$$

wherein $R^{*1}$ means a heteroatom containing group.

7. The process according to claim 6 wherein the metathesis catalyst represents at least one compound selected from the group consisting of the general formula (A)

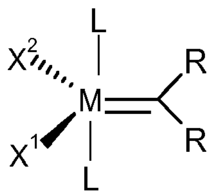

(A)

where
M is osmium or ruthenium,
the radicals R are identical or different and are each an alkyl, preferably $C_1$-$C_{30}$-alkyl, cycloalkyl, preferably $C_3$-$C_{20}$-cycloalkyl, alkenyl, preferably $C_2$-$C_{20}$-alkenyl, alkynyl, preferably $C_2$-$C_{20}$-alkynyl, aryl, preferably $C_6$-$C_{24}$-aryl, carboxylate, preferably $C_1$-$C_{20}$-carboxylate, alkoxy, preferably $C_1$-$C_{20}$-alkoxy, alkenyloxy, preferably $C_2$-$C_{20}$-alkenyloxy, alkynyloxy, preferably $C_2$-$C_{20}$-alkynyloxy, aryloxy, preferably $C_6$-$C_{24}$-aryloxy, alkoxycarbonyl, preferably $C_2$-$C_{20}$-alkoxycarbonyl, alkylamino, preferably $C_1$-$C_{30}$-alkylamino, alkylthio, preferably $C_1$-$C_{30}$-alkylthio, arylthio, preferably $C_6$-$C_{24}$-arylthio, alkylsulphonyl, preferably $C_1$-$C_{20}$-alkylsulphonyl, or alkylsulphinyl, preferably $C_1$-$C_{20}$-alkylsulphinyl radical, each of which may optionally be substituted by one or more alkyl, halogen, alkoxy, aryl or heteroaryl radicals,
$X^1$ and $X^2$ are identical or different and are two ligands, preferably anionic ligands, and
L represents identical or different ligands, preferably uncharged electron donors and
a catalysts of the general formula (B),

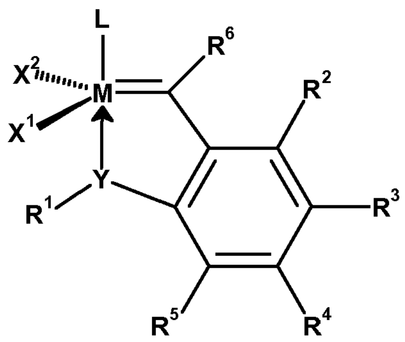

(B)

where

M is ruthenium or osmium,
Y is oxygen (O), sulphur (S), an N-$R^1$ radical or a P-$R^1$ radical, where $R^1$ is as defined below,
$X^1$ and $X^2$ are identical or different ligands,
$R^1$ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical, each of which may optionally be substituted by one or more alkyl, halogen, alkoxy, aryl or heteroaryl radicals,
$R^2$, $R^3$, $R^4$ and $R^5$ are identical or different and are each hydrogen, organic or inorganic radicals,
$R^6$ is hydrogen or an alkyl, alkenyl, alkynyl or aryl radical and
L is a ligand which has the same meanings given for the formula (A) as already given above.

**8.** The process according to claim 6 wherein at least one compound of the formula (2) is used selected from the group consisting of acrylonitrile, acrylamide, allyl amine, acrylic acid,methyl acrylate, ethyl acrylate, glycidyl acrylate, tert-butyl acrylate, 1H,1H,2H,2H-perfluorodecyl acrylate, polyethylenglykol methyletheracrylate, 2-ethylhexyl acrylate and ethylene glycol methyl ether acrylate.

**9.** The process according to claim 6 wherein at the copolymer of component (i) does have an average molecular weight Mn at least 50.000, preferably in the range of 50.000 to 1.500.000, in particular in the range of 50.000 to 1.000.000 g/mol.

**10.** A vulcanizable polymer composite comprising beside at least one functionalized copolymer according to at least one of the claims 1 to 5, at least one cross-linking agent and/or curing system.

**11.** A vulcanized rubber article made by vulcanizing the vulcanizable polymer composition according to claim 10.

**12.** A process for forming a vulcanized rubber article comprising the steps processing a polymer composition according to claim 10 to form the final shape of the molded article and curing said rubber composition.

Europäisches Patentamt
European Patent Office
Office européen des brevets

# EUROPEAN SEARCH REPORT

Application Number
EP 13 17 9823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2009/009158 A2 (DOW GLOBAL TECHNOLOGIES INC [US]; ARRIOLA DANIEL J [US]; TIMMERS FRANC) 15 January 2009 (2009-01-15)<br>* the whole document *<br>----- | 1-12 | INV.<br>C08C19/28<br>C08F210/18<br>C08F255/06<br>C08F8/00<br><br>ADD.<br>B01J23/46 |
| | | | TECHNICAL FIELDS SEARCHED (IPC) |
| | | | B01J<br>C08C<br>C08F |

The present search report has been drawn up for all claims

1

| Place of search | Date of completion of the search | Examiner |
|---|---|---|
| Munich | 19 November 2013 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 9823

This annex lists the patent family members relating to the patent documents cited in the above-mentioned European search report. The members are as contained in the European Patent Office EDP file on
The European Patent Office is in no way liable for these particulars which are merely given for the purpose of information.

19-11-2013

| Patent document cited in search report | Publication date | Patent family member(s) | Publication date |
|---|---|---|---|
| WO 2009009158 A2 | 15-01-2009 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090318647 A
- WO 2009009158 A
- WO 9604289 A
- WO 9706185 A
- US 20020107138 A1, Hoveyda
- WO 2004035596 A, Grela
- EP 0319320 A1
- US 5208294 A
- US 4983678 A
- WO 2005005496 A2


### Non-patent literature cited in the description


- *Chem. Commun.,* 2004, 422-423
- *Angew Chem. Int. Ed.,* 2003, vol. 42, 4592
- *Eur. J. Org. Chem,* 2003, 963-966
- *Angew. Chem. Int. Ed.,* 2002, vol. 41, 4038
- *J. Org. Chem.,* 2004, vol. 69, 6894-96
- *Chem. Eur. J,* 2004, vol. 10, 777-784
- Encyclopedia of Polymer Science and Engineering. vol. 4, 66
- ENCYCLOPEDIA OF POLYMER SCIENCE AND ENGINEERING. vol. 17, 666